# EUROPÄISCHE PATENTSCHRIFT

(11) **EP 3 633 405 B1**
(45) Veröffentlichungstag und Bekanntmachung des Hinweises auf die Patenterteilung: **11.01.2023**
(21) Anmeldenummer: 18198425.3
(22) Anmeldetag: 03.10.2018
(51) Int. Cl.: G01S 17/42, G01S 7/481, G01S 7/483, G01S 7/4863

(54) **MESSGERÄT ZUR GEOMETRISCHEN 3D-ABTASTUNG EINER UMGEBUNG MIT EINER VIELZAHL SENDEKANÄLE UND SEMICONDUCTOR-PHOTOMULTIPLIER SENSOREN**
MEASURING APPARATUS FOR GEOMETRIC 3D-SCANNING OF AN ENVIRONMENT HAVING A PLURALITY OF EMISSION CHANNELS AND SEMICONDUCTOR PHOTOMULTIPLIER SENSORS
APPAREIL DE MESURE POUR BALAYAGE 3D GÉOMÉTRIQUE D'UN ENVIRONNEMENT COMPORTANT UNE PLURALITÉ DE CANAUX D'ÉMISSION ET DE CAPTEURS PHOTOMULTIPLICATEUR À SEMI-CONDUCTEURS

(43) Veröffentlichungstag der Anmeldung: 08.04.2020
(73) Patentinhaber: Hexagon Technology Center GmbH, 9435 Heerbrugg (CH)
(72) Erfinder: WOHLGENANNT, Rainer, A-6833 Klaus (AT); HINDERLING, Jürg, CH-9437 Marbach (CH)
(74) Vertreter: Kaminski Harmann

(56) Entgegenhaltungen:
- EP-A1- 3 226 029
- EP-A1- 3 324 203
- EP-A2- 2 317 347
- US-A1- 2018 143 305

## Beschreibung

Die Erfindung betrifft ein Messgerät zur dreidimensionalen geometrischen Erfassung einer Umgebung mittels einer Vielzahl von Sendekanälen.

Zur Erfassung von Objekten oder Oberflächen in einer Umgebung werden häufig Verfahren verwendet, welche ein Abtasten mittels eines Distanzmessstrahls durchführen, z.B. eines gerichteten gepulsten Laserstrahls eines Laserscanners. Dabei wird jeweils die räumliche Position eines Oberflächenpunktes erfasst, indem durch den Laser die Entfernung zum angezielten Oberflächenpunkt gemessen und diese Messung mit Winkelinformationen der Laseremission verknüpft wird. Aus diesen Entfernungs- und Winkelinformationen kann die räumliche Lage des erfassten Punktes bestimmt und beispielsweise eine Oberfläche vermessen werden.

Typische 3D-Messgeräte sind in der Lage, den Distanzmessstrahl einer Entfernungsmessvorrichtung über eine Oberfläche oder entlang einer Kante zu führen und damit bei einer vorgegebenen Abtast- oder Messrate sukzessive zu verschiedenen Messrichtungen gleichzeitig Richtung und Entfernung zu den jeweiligen Messpunkten zu erfassen. Richtung und Entfernung sind dabei bezogen auf einen Messbezugspunkt wie z.B. der Standort oder Nullpunkt des Messgeräts, liegen mit anderen Worten in einem gemeinsamen Bezugs- oder Koordinatensystem, so dass also die einzelnen Messrichtungen und damit die Einzelmessdaten über das lokale Koordinatensystem miteinander verknüpft sind. Aus dem Entfernungsmesswert und der damit korrelierten Messrichtung für jeden Punkt kann somit anschliessend, beispielsweise mittels einer integrierten oder externen Datenverarbeitungsanlage aus der Vielzahl der gescannten Punkte eine sogenannte 3D-Punktwolke generiert werden.

Oft wird parallel zu dieser rein geometrischen Erfassung der Oberfläche auch noch eine Bildaufnahme durch eine Kamera durchgeführt, welche neben der visuellen Gesamtansicht auch weitere Informationen, z.B. bezüglich der Oberflächentextur, bereitstellt.

Insbesondere kann die 3D-Erfassung auch während einer räumlichen Bewegung des Messgeräts erfolgen, wobei die Eigenbewegung des Messgeräts beispielsweise mittels eines globalen Satellitenpositioniersystems (GSNS, "global navigation satellite system"), mittels eines Trägheitsmesssystems (IMU, "inertial measuring unit"), und/oder mittels simultaner Positionsbestimmung und Kartenerstellung (SLAM, "Simultaneous Localization and Mapping") erfasst und berücksichtigt werden kann.

3D-Scannen ist eine sehr wirkungsvolle Technologie um innerhalb von Minuten oder Sekunden Millionen von Einzelmessdaten, insbesondere 3D-Koordinaten, zu produzieren. Typische Messaufgaben sind beispielsweise die Aufnahme von Objekten bzw. deren Oberflächen im Baubereich, im Bergbau, oder in Industrieanlagen, die Aufnahme von Häuserfassaden oder historischen Gebäuden, oder die Aufnahme von Unfallorten und Verbrechensszenen. Weitere 3D-Messaufgaben liegen beispielsweise in der Überwachung einer Umgebung, beispielsweise im Rahmen eines Warn- oder Kontrollsystems für eine industrielle Fertigungsanlage oder im Rahmen einer Verwendung in Fahrassistenzsystemen. Ferner wird 3D-Scannen beispielsweise verwendet für die Erkennung, Klassifikation, oder Vermessung von sich am Messgerät vorbei bewegenden Objekten, z.B. Personen, Fahrzeuge, oder Werkstücke.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel beispielsweise anhand der Laufzeit, der Form, und/oder der Phase des Pulses bestimmt werden kann. Solche Laserdistanzmesser haben sich mittlerweile in vielen Bereichen als Standardlösungen durchgesetzt.

Zur Detektion des zurückgestreuten Pulses oder einer Pulsfolge werden zumeist zwei unterschiedliche Ansätze oder eine Kombination daraus verwendet.

Bei der so genannten Schwellwertmethode wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Der andere Ansatz basiert auf der Abtastung bzw. dem Sampling des rückgestreuten Pulses. Diese Methode kann auch als ganzheitliche Signalerfassung betrachtet werden, wobei durch das Abtasten sowohl die gesamte Signal- als auch die wesentliche Rauschinformation erfasst werden, was zu einer Erhöhung der Messgenauigkeit führt. Ein emittiertes Signal wird detektiert, indem die von einem Detektor erfasste Strahlung abgetastet, innerhalb des abgetasteten Bereichs ein Signal identifiziert und schliesslich eine Lage des Signals zeitlich bestimmt wird. Durch die Verwendung einer Vielzahl von Abtastwerten und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

Heutzutage wird dabei mittels der Wellenformdigitalisierungsmethode ("Waveform Digitizing", WFD) häufig die gesamte Wellenform des analogen Signals der von einem Detektor erfassten Strahlung abgetastet. Nach Identifikation der Codierung des zugehörigen Sendesignals (ASK, FSK, PSK, auch Abstands- oder Intervallmodulation genannt, etc.) eines empfangenen Signals, wird beispielsweise mittels Fouriertransformation oder aus einem definierten Verlaufspunkt des abgetasteten, digitalisierten und rekonstruierten Signals, wie den Wendepunkten, den Kurvenmaxima, oder integral mittels eines aus der Zeitinterpolation bekannten Optimum Filters, sehr genau eine Signallaufzeit ("Pulslaufzeit") bestimmt.

Zum Beispiel wird beim Ansatz der zeitlich sehr präzisen Abtastung bzw. dem Sampling des zurückgestreuten Signals das vom Detektor erzeugte elektrische Signal mittels eines Analog-Digital-Wandlers ("Analog-Digital-Converter", ADC) in eine digitale Signalfolge umgewandelt. Dieses digitale Signal wird anschliessend meistens in Echtzeit weiter verarbeitet. In einem ersten Schritt wird diese Signalfolge durch spezielle digitale Filter dekodiert (ASK, FSK, PSK, etc.), also erkannt, und schliesslich die Lage einer ein Zeitintervall beschreibenden Signatur innerhalb der Signalfolge bestimmt. Beispiele für zeitauflösende Signaturen sind Schwerpunkt, Sinus-Cosinus-Transformation, Funktionale davon, oder beispielsweise amplitudennormierte FIR-Filter ("finite impulse response filter") mit einem von der Pulsform abgeleiteten Gewichtskoeffizientensatz. Um allfällige Distanzdrifts zu eliminieren wird eine entsprechende zeitauflösende Signatur auch mit einem internen Startsignal verglichen. Um irreversible Samplingfehler zu vermeiden, werden zusätzliche dem Fachmann bekannte digitale Signal-Transformationen angewendet.

Eine der einfachsten Modulationsarten ist die Kennzeichnung der einzelnen Impulse oder der Pulsfolgen per Abstandscodierung, wie z.B. beschrieben in der EP 1 832 897 B1. Diese wird beispielsweise zu dem Zwecke der Re-Identifizierbarkeit eingesetzt. Diese Wiedererkennung ist dann erforderlich, wenn eine Mehrdeutigkeit entsteht, welche bei der Laufzeitmessung von Impulsen durch unterschiedliche Situationen hervorgerufen werden kann, beispielsweise wenn sich zwischen Vermessungsgerät und Zielobjekt mehr als ein Impuls oder eine Impulsgruppe befindet. Insbesondere vorteilhaft ist die Pulskodierung bei Mehrstrahlsystemen bestehend aus mehreren gemeinsam ausgesendeten Laserstrahlen und zugeordneten Empfangssensoren.

Mehrstrahl-Messgeräte haben verschiedene Vorteile, z.B. dass auch mit einer langsameren Rotationsgeschwindigkeit einer Sender-Empfänger-Einheit, z.B. eines rotierenden Strahlablenkspiegels oder einer rotierenden Sender-Empfänger-Plattform, eine höhere Punktrate oder eine höhere Punktdichte erzielbar ist. Einzelne Teilstrahlen der gemeinsam ausgesendeten Laserstrahlen müssen jedoch jeweils auf zugeordnete Empfangsbereiche ausgerichtet werden. Ferner können zwischen einzelnen Empfangsstrahlen beispielsweise störende Cross-Talks auftreten, wobei ein spezifischer Empfangsbereich, der einem ersten Strahl zugeordnet ist, Licht eines zweiten Strahls detektiert, der nahe dem ersten Strahl ausgesendet wird. Dadurch wird die Distanzmessgenauigkeit limitiert, wobei insbesondere gar Fehlmessungen erzeugt werden können oder einzelne Messpunkte für die 3D-Messung gestrichen werden müssen.

Zur Reduktion bzw. Vermeidung von Cross-Talks sind verschiedene Massnahmen bekannt, z.B. eine Verringerung der Abtastdichte, Strahlmaskierung, z.B. mittels Verwendung von LCDs, oder komplizierte optische Anordnungen, um mehrere Emitter-Detektor-Paarungen präzise auszurichten.

US 2018/143 305 offenbart ein System, welches einen beweglichen Spiegel zur Strahlablenkung und zur Erzeugung eines Scan-Musters verwendet. Das System beruht auf einer Abtastung der Umgebung mittels eines beliebig ausrichtbaren Distanzmessstrahls. EP 3 226 029 offenbart einen Laserscanner, bei dem ein Abtaststrahl um eine horizontale und um eine vertikale Achse bewegt wird, um eine Umgebung abzutasten.

Es ist eine Aufgabe der vorliegenden Erfindung, ein Mehrstrahl-Messgerät zur dreidimensionalen geometrischen Erfassung einer Umgebung bereitzustellen, womit die aus dem Stand der Technik bekannten Nachteile vermieden werden, insbesondere wobei die Komplexität des Messgeräts reduziert wird aber dennoch schnelle und präzise Messungen mit einer hohen Punktdichte ermöglicht werden.

Eine weitere spezielle Aufgabe der vorliegenden Erfindung ist eine Erhöhung der Reichweite des Mehrstrahlsystems. Diese Aufgaben werden durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung betrifft ein Messgerät zur dreidimensionalen geometrischen Erfassung einer Umgebung, aufweisend: eine Basis; eine gegenüber der Basis um eine Rotationsachse rotierbare Sender-Empfänger-Plattform, konfiguriert zur Rotation eines Strahlaustrittsbereichs und eines Strahleintrittsbereichs um die Rotationsachse; und einen Winkelmesser zum Erfassen von Winkeldaten bezüglich der Winkelausrichtung der Sender-Empfänger-Plattform um die Rotationsachse.

Der Winkelmesser kann beispielsweise ausgebildet sein als Winkelencoder zum inkrementellen Bestimmen von Winkeländerungen. Ferner kann der Winkelmesser beispielsweise konfiguriert sein, lediglich eine bestimmte Winkelposition exakt zu detektieren, beispielsweise mit einem Schalter, und aufgrund der bekannten Rotationsgeschwindigkeit und der bekannten Zeitverläufe und Pulsraten die Zwischenwinkel zu berechnen bzw. zu interpolieren.

Das Messgerät hat eine Sendeeinheit mit einer Vielzahl von n Sendekanälen zum Aussenden von gepulsten Distanzmessstrahlen über den Strahlaustrittsbereich, wobei die Sendekanäle bezüglich der Sender-Empfänger-Plattform eine fixe Anordnung haben und mit jedem der Sendekanäle jeweils eine unterschiedliche Elevation bezüglich einer zur Rotationsachse orthogonalen Bezugsebene abtastbar ist.

Für eine Azimut-Einstellung der Sender-Empfänger-Plattform definieren die Sendekanäle also (zumindest bezüglich ihrer Elevation) unterschiedliche Strahl- bzw. Abtastrichtungen, wobei beispielsweise mehrere Distanzmessstrahlen jeweils über separat verlaufende optische Kanäle der Sender-Empfänger-Plattform erzeugt werden. Alternativ kann ein Teil der Sendekanäle aber auch derart erzeugt werden, dass beispielsweise mittels eines gemeinsam nutzbaren über ein Ablenkelement variierbaren Distanzmessstrahls unterschiedliche Sendekanäle/Abtastrichtungen erzeugt werden.

Ferner weist das Messgerät eine Empfangseinheit und eine Recheneinheit auf, wobei die Empfangseinheit konfiguriert ist zum Erfassen von über den Strahleintrittsbereich zurückkommenden gepulsten Distanzmessstrahlen und zum Erzeugen von Distanzmessdaten bezüglich der Vielzahl von Sendekanälen, und die Recheneinheit konfiguriert ist zum Ableiten einer dreidimensionalen Punktwolke basierend auf den Winkeldaten, den Distanzmessdaten, und einer Anordnungs-Information indikativ für die Anordnung der Vielzahl von Sendekanälen.

Vorzugsweise sind der Strahlaustrittsbereich und der Strahleintrittsbereich bi-axial ausgebildet, wobei der biaxiale Versatz senkrecht zu einer Fächerung der n Sendekanäle ausgebildet ist, beispielsweise wobei die n Sendekanäle eine vertikale Fächerebene definieren.

Die gepulsten Distanzmessstrahlen und die Distanzmessdaten sind konfiguriert für eine Distanzmessung nach dem Pulslauf-Prinzip, wobei das Messgerät insbesondere konfiguriert sein kann zur Bestimmung der Laufzeit basierend auf der Form und/oder der Phase eines Pulses, im Speziellen mittels der WFD-Methode.

Die Anordnungs-Information ermöglicht Rückschluss auf ein gemeinsames Bezugssystem der zeitgleich aktivierten Sendekanäle, so dass die einzelnen Messrichtungen und damit die einzelnen Distanzmessungen mittels der einzelnen Distanzmessstrahlen der Sendekanäle über ein lokales Koordinatensystem miteinander verknüpft sind.

Gemäss der vorliegenden Erfindung weist die Empfangseinheit eine Sensoranordnung von m Semiconductor-Photomultiplier Sensoren (SPM-Sensoren) auf, wobei jeder der Semiconductor-Photomultiplier Sensoren jeweils eine Vielzahl von jeweils auf einem internen Verstärkungsmechanismus basierenden und im Geiger-Modus operierenden Mikrozellen aufweist und die Ausgangswerte der Mikrozellen eines jeweiligen Semiconductor-Photomultiplier Sensors jeweils ein gemeinsames Ausgangssignal erzeugen.

Dadurch kann eine weitgehende Unabhängigkeit zwischen Anzahl Sendekanäle und Empfangsbereiche für die einzelnen Sendekanäle erreicht werden. Insbesondere erübrigt sich eine komplexe Ausrichtung einzelner Sendekanäle auf speziell zugeordnete Empfangsbereiche. Eine Ausrichtung muss lediglich derart erfolgen, dass Distanzmessstrahlen von gleichzeitig aktiven unterschiedlichen Sendekanälen jeweils auf unterschiedliche SPM-Sensoren abgebildet werden.

Entsprechend ist erfindungsgemäss m kleiner als n, und die Sende- und Empfangseinheit sind konfiguriert, dass mindestens zwei der Sendekanäle der Vielzahl von Sendekanäle einem gemeinsamen Semiconductor-Photomultiplier Sensor der Sensoranordnung zugeordnet sind, welcher konfiguriert ist zum Erzeugen der Distanzmessdaten bezüglich der mindestens zwei Sendekanäle.

So genannte Semiconductor-Photomultiplier Sensoren (SPM-Sensoren), auch als SiPM (Silicon Photomultiplier) bezeichnet, mit einer Photoempfindlichkeit im sichtbaren und nahen infraroten Spektralbereich sind in der Regel als Matrix-Struktur auf einem Chip angeordnet. Die SiPM lösen im sichtbaren und nahen ultravioletten Spektralbereich allmählich die bisher eingesetzten Photomultiplier Tubes ab, wobei die SiPM insbesondere im sichtbaren Wellenlängenbereich eine hohe spektrale Empfindlichkeit aufweisen. Im Stand der Technik sind beispielsweise SiPM erhältlich, die bis in den Nahinfrarot-Bereich bis weit über 900 nm Wellenlänge sensitiv sind. Kommerzielle SPM-Sensoren sind auch bei Wellenlängen zwischen 800 nm und 1800 nm erhältlich. Diese Sensoren bestehen hauptsächlich aus dem Halbleitermaterial InGaAs. Auch diese Sensoren weisen je nach Design eine externe oder interne Matrix-Struktur über die photo-sensitive Fläche auf.

Das Besondere an diesen SPM-Sensoren ist deren sehr hohe Photoempfindlichkeit, weshalb diese bisher bei sehr schwachen optischen Signalen eingesetzt werden, wo lediglich 1 bis 50 Photonen auf den Sensor treffen. Zum Beispiel kann durch diese im Vergleich zu herkömmlichen Pin-Dioden und Avalanche-Photodioden (APD) höhere Photoempfindlichkeit die Reichweite der Distanzmessvorrichtung erheblich erhöht werden.

Ferner arbeiten SPM-Sensoren mit einer niedrigen Spannung haben eine hohe Verstärkung, hohe Photonendetektionseffizienz, und zeichnen sich trotz der grossen Detektionsfläche der einzelnen Pixel durch eine sehr hohe elektronische Bandbreite im GHz-Bereich aus. Dies ermöglicht präzise Distanzmessungen mit einer hohen Zeitauflösung.

SPM-Sensoren bestehen aus hunderten, tausenden, bis über zehntausenden von Mikrozellen und sind so in der Lage, Pulse mit tausenden oder hundertausenden von Photonen gleichzeitig zu empfangen. Typischerweise werden SPM-Sensoren im Overbreak Modus (Geiger-Mode) betrieben und erzeugen troth der inneren digitalen Architektur eine Signalantwort vergleichbar zu analogen Sensoren. Beim Ansprechen einer Mikrozelle erzeugt diese einen einzelnen diskreten ("digitalen") Spannungspuls, wobei sich das "analoge" Verhalten durch die Vielzahl an Mikrozellen ergibt, die jeweils einen gemeinsamen diskreten Spannungspuls liefern.

Nachdem eine Mikrozelle durch einen optischen Puls getriggert wurde, weist sie eine gewisse Totzeit auf, in der sie nicht erneut getriggert werden kann ("Recovery Time"). Diese entspricht beispielsweise einem Vielfachen der optischen Pulsbreite. Wenn eine Mikrozelle also bereits getriggert wurde, kann sie nicht mehr durch weitere auftreffende Photonen desselben optischen-Anregungspulses getriggert werden. Je mehr Mikrozellen nun bereits angeregt wurden, umso weniger Mikrozellen bleiben übrig, die durch ein Photon des optischen-Anregungspulses angeregt werden können. Die dadurch resultierende Charakteristik entspricht einer negativ-exponentiellen Kennlinie, d.h. einer inhärenten Reduktion des Dynamikbereiches, und bietet einen gewaltigen Vorteil im Vergleich zu herkömmlichen Avalanche Photodioden (PIN, APD), welche schlagartig in ein nichtlineares und nur schwer zu kontrollierendes Verhalten wechseln, sobald sie übersteuert werden.

Ferner sind beispielsweise aufgrund der Parallelschaltung der vielen Mikrozellen zu Mikrozellendomänen auch bei solarem Hintergrundlicht nach wie vor ausreichend freie Zellen für die Signalphotonen vorhanden.

SPM-Sensoren werden oft als Anordnung mehrerer einzelner SPM-Sensoren - welche jeweils eine Vielzahl Mikrozellen aufweisen - verwendet (so genanntes SPM-Array), wobei jeweils die Mikrozellen eines jeweiligen SPM-Sensors in einem einzigen gemeinsamen Ausgang zusammengefasst werden.

Insbesondere bieten SPM-Sensoren beispielsweise den Vorteil, dass damit grossflächige Sensoren mit einer grossen photoaktiven Fläche realisiert werden können. Solche grossflächigen Sensoren sind mit APDs auf Grund der geringen photosensitiven Fläche nur sehr schwierig oder überhaupt nicht zu realisieren.

Gemäss einer Ausführungsform weist die Empfangseinheit ferner k separierbare Distanzmesskanäle auf, wobei k kleiner oder gleich m ist und jeder der Semiconductor-Photomultiplier Sensoren der Sensoranordnung jeweils einem der k separierbaren Distanzmesskanälen zuordenbar ist. Dabei ist jeder der k separierbaren Distanzmesskanäle konfiguriert zum Erzeugen von Distanzmessdaten bezüglich eines ihm zugeordneten Semiconductor-Photomultiplier Sensors der Sensoranordnung.

Somit können einzelne Sendekanäle also beispielsweise kurz aufeinanderfolgend oder auch zeitgleich in Gruppen aktiviert werden, beispielsweise um mittels Aussendens von Sendekanalgruppen eine erhöhte Punktrate sowie eine erhöhte Punktdichte zu erzielen.

Entsprechend ist die Sendeeinheit in einer weiteren Ausführungsform konfiguriert, eine Gruppe von k zeitgleich aktivierbaren Sendekanälen der Vielzahl von Sendekanälen als eine erste Sendekanalgruppe zu aktivieren, wobei die Sende- und die Empfangseinheit konfiguriert sind, dass die erste Sendekanalgruppe, die Sensoranordnung, und die separierbaren Distanzmesskanäle aufeinander abgestimmt aktivierbar sind, so dass Ausgangssignale der Sensoranordnung bezüglich der k Sendekanäle der ersten Sendekanalgruppe zeitgleich erfassbar sind.

Zum Beispiel weist die Empfangseinheit einen Kanalwähler, insbesondere einen Multiplexer, einen Datenspeicher, und eine Distanzmesseinheit auf, wobei der Kanalwähler konfiguriert ist zum Selektieren einer Gruppe von Semiconductor-Photomultiplier Sensoren der Sensoranordnung und zum Weiterleiten von Ausgangssignalen der Gruppe von Semiconductor-Photomultiplier Sensoren an den Datenspeicher. Der Datenspeicher ist konfiguriert zum Speichern von Daten bezüglich der Ausgangssignale der Gruppe von Semiconductor-Photomultiplier Sensoren, und die Distanzmesseinheit ist konfiguriert zum parallelen und/oder sequentiellen Erzeugen von Distanzmessdaten bezüglich zumindest eines Teils der Semiconductor-Photomultiplier Sensoren der Gruppe von Semiconductor-Photomultiplier Sensoren.

In einer weiteren Ausführungsform ist die Sendeeinheit konfiguriert, die Vielzahl von Sendekanälen derart zu aktivieren, dass eine Abfolge von, insbesondere jeweils gleich langen, Sendeintervallen erzeugt wird, wobei während eines jeweiligen Sendeintervalls die erste Sendekanalgruppe und mindestens eine weitere Gruppe von zeitgleich aktivierten Sendekanälen der Vielzahl von Sendekanälen als zweite Sendekanalgruppe aktiviert wird, wobei die erste und die zweite Sendekanalgruppe im jeweiligen Sendeintervall zeitlich aufeinanderfolgend aktiviert werden, die zweite Sendekanalgruppe konfiguriert ist Zwischen-Elevationen von mit der ersten Sendekanalgruppe abgetasteten Elevationen abzutasten, und die Sende- und die Empfangseinheit konfiguriert sind, dass die zweite Sendekanalgruppe, die Sensoranordnung, und die separierbaren Distanzmesskanäle aufeinander abgestimmt aktivierbar sind, so dass Ausgangssignale der Sensoranordnung bezüglich der Sendekanäle der zweiten Sendekanalgruppe zeitgleich erfassbar sind.

Ferner kann das Messgerät auch konfiguriert sein, dass auch die Zeiterfassung parallel erfolgen kann. Entsprechend weist die Empfangseinheit gemäss einer weiteren Ausführungsform eine Zeiterfassungseinheit mit mindestens einer von folgenden Anordnungen auf: ein mehrkanaliger Wellenfront-Digitalisierer (WFD), eine mehrkanalige Schwellwertdiskriminatoreinheit mit nachgeschalteten Time-to-Delay Konvertern (TDC), und ein Field Programmable Gate Array (FPGA) mit einprogrammierter mehrkanaliger Zeiterfassungslogik.

Durch geeignete Wahl des Verhältnisses zwischen Anzahl SPM-Sensoren und Sendekanälen kann beispielsweise das Signal-Rausch-Verhältnis angepasst werden, indem während eines Sendeintervalls ausgesendete Distanzmessstrahlen auf an die Strahlgrösse angepasste SPM-Sensoren abgebildet werden.

Zum Beispiel weist die Sensoranordnung mindestens zwei mal k, insbesondere mindestens drei mal k, Semiconductor-Photomultiplier Sensoren auf, wobei die Empfangseinheit konfiguriert ist, dass jeder der mindestens zwei mal k, bzw. drei mal k, Semiconductor-Photomultiplier Sensoren jeweils einem der separierbaren Distanzmesskanäle zuordenbar ist.

Um beispielsweise den Rechenaufwand für die Bestimmung der Punktwolke zu reduzieren kann es vorteilhaft sein, wenn die Dauer des Sendeintervalls kürzer ist als die Zeitdifferenz zwischen aufeinanderfolgenden Sendeintervallen. Entsprechend ist die Sendeeinheit gemäss einer weiteren Ausführungsform konfiguriert die Abfolge von Sendeintervallen derart zu erzeugen, dass das Verhältnis von Sendeintervall zur Zeitdifferenz zwischen aufeinanderfolgenden Sendeintervallen der Abfolge von Sendeintervallen kleiner als 0.5 ist.

Zum Erzeugen der Vielzahl von Sendekanälen weist der Sendekanal beispielsweise mindestens eine der folgenden Komponenten auf: eine Laserdiode, z.B. eine Puls-Laserdiode, ein Streifenlaser, und ein Laserbarren, insbesondere wobei die Sendeeinheit ein Faserbündel aufweist und Laserstrahlung der Komponente auf ein Faserbündel eingekoppelt wird.

Die Laserstrahlquellen können zum Beispiel mehrfach auf einem Träger ("stacked") oder im Laserchip ("multijunction" oder "microstacked"), und/oder als Laserarray angeordnet werden, z.B. um die Leistung zu erhöhen. Laserarrays (Laserbarren) sind effiziente und kostengünstige Anordnungen mehrerer Einzel-Laserdioden auf einem Substrat/Wafer, was beispielsweise Vorteile hinsichtlich kleiner Baugrösse der Optik mit sich bringt. Auch sind damit beispielsweise kleinere Winkel zwischen den Distanzmessstrahlen und somit eine höhere Abtastdichte realisierbar.

In einem anderen Beispiel können mittels einer Kombination mit entlang der Längsachse eines Streifenlasers angeordneten Faserbündeln aus dem Streifenlaser und mehreren optischen Fasern direkt mehrere Einzelstrahlen erzeugt werden, wobei beispielsweise die Faserenden der optischen Fasern in einer Lochplatte mit geeigneten Abständen angeordnet sind, um mit einem oder mehreren Linsenelementen den gewünschten Winkelversatz zu erzielen.

Gemäss einer weiteren Ausführungsform weist der Sendekanal zum Erzeugen der Vielzahl von Sendekanälen eine erste Laserstrahlquelle und einen optischen Strahlteiler auf, wobei die Laserstrahlquelle konfiguriert ist zum Erzeugen eines ersten gepulsten Laserstrahls und der optische Strahlteiler konfiguriert ist zur Aufteilung des ersten gepulsten Laserstrahls in mehrere gepulste Teilstrahlen. Der Sendekanal ist also konfiguriert zum Erzeugen der Vielzahl von Sendekanälen basierend auf den mehreren gepulsten Teilstrahlen (Distanzmessstrahlen) des gepulsten Laserstrahls.

Zum Beispiel weist der optische Strahlteiler ein Dammann-Gitter, ein faseroptischer Teiler, ein holografisches Element, und/oder ein diffraktives optisches Element auf.

Insbesondere kann der optische Strahlteiler selektiv zuschaltbar sein, wobei beispielsweise mittels separater Laserstrahlquellen ein Grob-Abtastmuster erzeugt wird, welches durch Einschwenken des Strahlteilers aufgeteilt wird in ein feineres Fein-Abtastmuster, welches im Vergleich zum Grob-Abtastmuster eine höhere Abtastdichte/Punktdichte aufweist, also eine höhere örtliche Messauflösung ermöglicht. Zum Beispiel kann durch Ausschwenken des Strahlteilers die Intensität der Distanzmessstrahlen der einzelnen Sendekanäle und somit die Messreichweite auf Kosten der Ortsauflösung erhöht werden. Entsprechend ist der Sendekanal gemäss einer weiteren Ausführungsform konfiguriert zum Erzeugen einer ersten Laserstrahlanordnung zum Bereitstellen einer ersten Abtastdichte, wobei die Sendeeinheit eine Strahlteilereinheit aufweist, insbesondere den eingangs beschriebenen optischen Strahlteiler, konfiguriert zur Aufteilung der ersten Laserstrahlanordnung in eine zweite Laserstrahlanordnung, wobei die zweite Laserstrahlanordnung eine zur ersten Laserstrahlanordnung höhere Abtastdichte bereitstellt. Ferner ist die Sendeeinheit konfiguriert zum Ein- und Auskoppeln der Strahlteilereinheit in einen Strahlengang der Sendeeinheit, beispielsweise auf Höhe des Strahlaustrittsbereichs, zum Erzeugen der Vielzahl von Sendekanälen als Grob-Abtastmuster basierend auf der ersten Laserstrahlanordnung, und zum Erzeugen der Vielzahl von Sendekanälen als Fein-Abtastmuster basierend auf der zweiten Laserstrahlanordnung.

Gemäss einer weiteren Ausführungsform ist die Sendeeinheit konfiguriert, dass der Einfallswinkel und/oder der Auftreffpunkt des Laserstrahls auf den optischen Strahlteiler einstellbar ist, und die Vielzahl von Sendekanälen basierend auf unterschiedlichen Einstellungen des Einfallswinkels und/oder Auftreffpunkts des Laserstrahls erzeugt wird.

Zum Beispiel kann eine Strahlablenkung des ersten und/oder zweiten Laserstrahls dadurch erfolgen, dass ein zwischengelagertes optisches Element, z.B. eine Linse, ein Kollimator, ein Spiegel, z.B. MEMS, und/oder ein reflektives oder transmissives Prisma, bewegt wird. Ferner kann die Strahlablenkung auch dadurch erfolgen, dass die Laserstrahlen entweder translativ oder rotativ bewegt werden.

Alternativ kann die Vielzahl von Sendekanälen beispielsweise mittels Biegung eines Träger erzeugt werden. Zum Beispiel weist die Sendeeinheit dazu einen Träger auf, der konfiguriert ist zum Einnehmen von mindestens zwei unterschiedlichen Biegezuständen, sowie eine auf dem Träger angeordnete Anordnung von mehreren jeweils eine Laserstrahlachse definierenden Laserstrahlquellen. Ferner ist die Sendeeinheit konfiguriert, die Richtungen der Laserstrahlachsen der Anordnung von Laserstrahlquellen als Funktion der mindestens zwei unterschiedlichen Biegezustände einzustellen, so dass die Vielzahl von Sendekanälen basierend auf unterschiedlichen Einstellungen der Biegezustände des Trägers erzeugt wird. Beispielsweise erzeugen die Laserstrahlquellen direkt Distanzmessstrahlen eines gefächerten Grund-Strahlmusters, wobei die Winkel zwischen den Distanzmessstrahlen als Funktion des Biegezustands des Trägers vergrössert oder verkleinert werden.

Ferner kann das Messgerät konfiguriert sein zum mechanischen oder optischen Erzeugen von verschiedenen Ausbreitungsrichtungen eines einzelnen Strahlmusters aus Distanzmessstrahlen.

In einer weiteren Variante ist zumindest ein Teil der Sender-Empfänger-Plattform bezüglich der Rotationsachse um einen Kippwinkel verkippbar, und die Vielzahl von Sendekanälen wird basierend auf unterschiedlich eingestellten Kippwinkeln erzeugt, insbesondere wobei durch die unterschiedlich eingestellten Kippwinkel eine Erweiterung des Elevations-Gesichtsfelds des Messgeräts erzeugt wird.

Das erfindungsgemässe Messgerät und die verschiedenen Aspekte der Erfindung werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: eine äussere Ansicht eines exemplarischen Grundaufbaus des erfinderischen Messgeräts;
- Fig. 2a,b:: eine innere Ansicht des exemplarischen Grundaufbaus des erfinderischen Messgeräts in einer Seitenansicht und einer Draufsicht;
- Fig. 3:: Abhängigkeit der Laserspotgrösse am Detektor von der Messdistanz, was zu distanzabhängigen Crosstalks zwischen gleichzeitig aktivierten Sendekanälen führt;
- Fig. 4:: eine Ausführungsform der Empfangseinheit, mit einer mehrkanalfähigen Distanzmesseinheit zur simultanen Zeitmessung von mehreren Empfangssignalen von mehreren Distanzmessstrahlen;
- Fig. 5:: schematische Darstellung von drei Sendekanalgruppen;
- Fig. 6:: schematische Darstellung von in Sendeintervallen aktivierten Sendekanalgruppen als Funktion der Sendezeit;
- Fig. 7:: schematische Darstellung einer Sensorfläche aus mehreren SPM-Sensoren und zeitliche Auftreffmuster der Distanzmessstrahlen der in einem Senderintervall ausgesendeten Distanzmessstrahlen auf der Sensorfläche;
- Fig. 8:: schematische Darstellung eines Laserarrays;
- Fig. 9:: schematische Darstellung einer kommerziellen Lasereinheit.

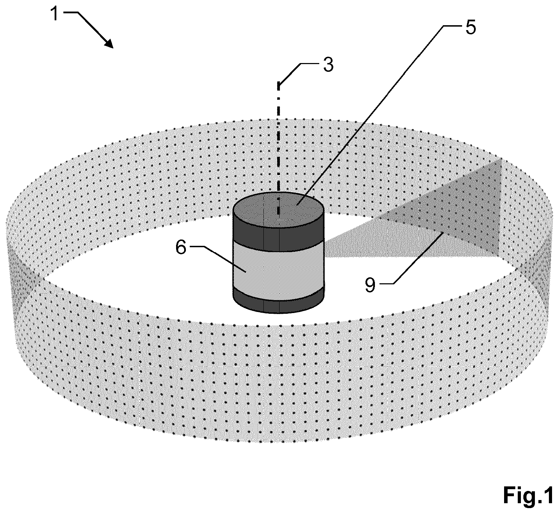

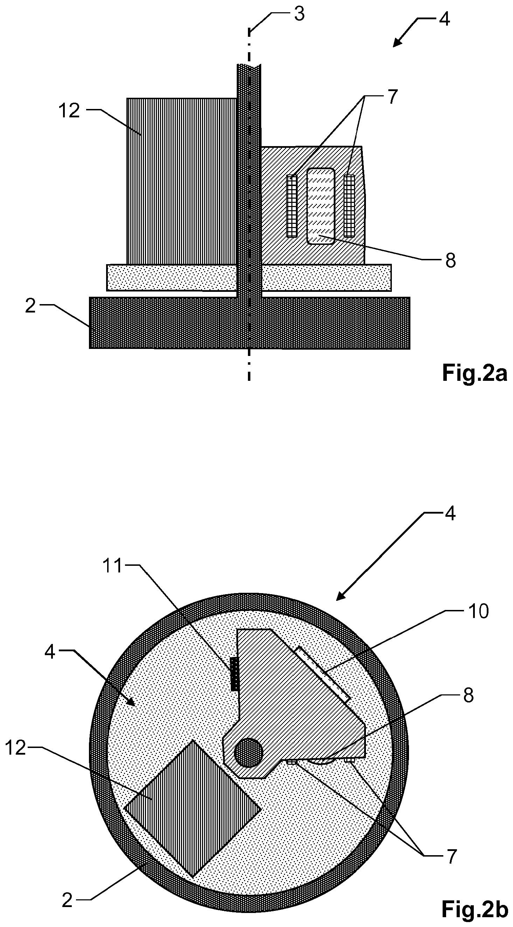

**Figur 1** und die **Figuren 2a****,b** zeigen jeweils eine äussere Ansicht bzw. eine innere Seitenansicht und eine innere Draufsicht eines exemplarischen Grundaufbaus des erfinderischen Messgeräts 1, ausgebildet mit einer Basis 2 und einer an der Basis um eine Rotationsachse 3 gegenüber der Basis rotierbar angeordneten Sender-Empfänger-Plattform 4. Die Sender-Empfänger-Plattform 4 ist dabei von einem an der Basis 2 fixierten Schutzgehäuse 5 umschlossen, welches ein umlaufendes strahldurchlässiges Fenster 6 aufweist.

Alternativ könnte das Schutzgehäuse 5 beispielsweise auch konfiguriert sein, um mit der Sender-Empfänger-Plattform 4 mitzudrehen, um beispielsweise das strahldurchlässige Fenster 6 zu minimieren, beispielsweise abgestimmt auf den Strahlaustrittsbereich 7 und den Strahleintrittsbereich 8 der Sender-Empfänger-Plattform 4.

Insbesondere ist das Schutzgehäuse beispielsweise staubdicht und/oder wasserdicht (IP65), wobei das Messgerät konfiguriert ist, dass Strahlablenkungen der Sende- und Empfangsstrahlen kompensiert werden.

Das Messgerät 1 ist konfiguriert zum Erzeugen einer Vielzahl von Sendekanälen zum Aussenden von gepulsten Distanzmessstrahlen, wobei durch unterschiedliche Sendekanäle unterschiedliche Elevationen abtastbar sind. Die Elevation bezieht sich hierbei auf einen Winkel zu einer zur Rotationsachse 3 orthogonalen Bezugsebene. Bei exakt vertikaler Ausrichtung der Rotationsachse 3, wie in Fig. 2a dargestellt, entspricht die Elevation also beispielsweise bei einer bestimmten Distanz der Höhe über Boden. Es versteht sich jedoch von selbst, dass das Messgerät 1 in beliebiger Ausrichtung zum Boden angeordnet sein kann. Zum Beispiel entspricht die Elevation bei einer horizontalen Ausrichtung der Rotationsachse 3 einem horizontalen Strahlrichtungswinkel bezüglich einer Vertikalebene.

In der in Fig. 2a gezeigten exemplarischen horizontalen Aufstellung des Messgeräts und damit vertikaler Ausrichtung der Rotationsachse 3 definiert die Vielzahl von Sendekanälen also einen um die Rotationsachse 3 rotierenden (in einer Vertikalebene liegenden) Fächer 9 aus Distanzmessstrahlen.

Dadurch kann bei Rotation des Fächers 9 um die Rotationsachse 3 beispielsweise ein umlaufendes Gesichtsfeld (Feld des Scanbereichs), z.B. von 360° x 25°, oder mittels einer azimutalen Schwenkbewegung (so genannter "Sweep Mode") ein Teilgesichtsfeld, z.B. 80° x 25°, abgetastet werden. Ferner kann das vertikale Gesichtsfeld beispielsweise durch Verkippung der Sender-Empfänger-Plattform 4 bezüglich der Rotationsachse 3 erweitert werden, beispielsweise zu 360° × 40°.

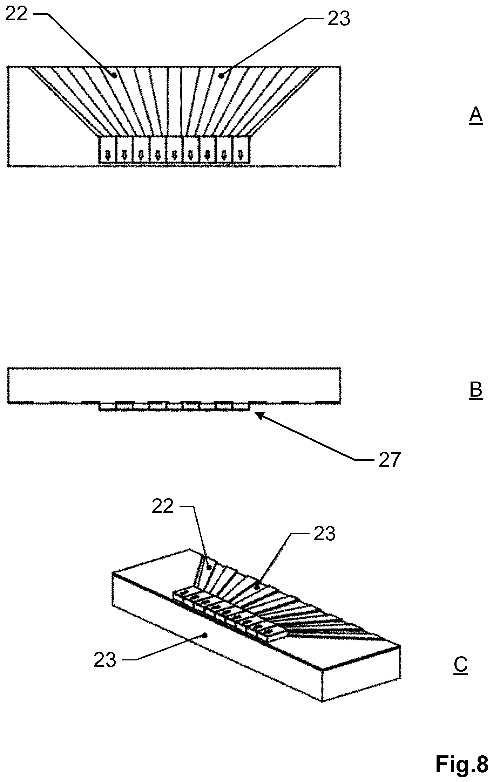

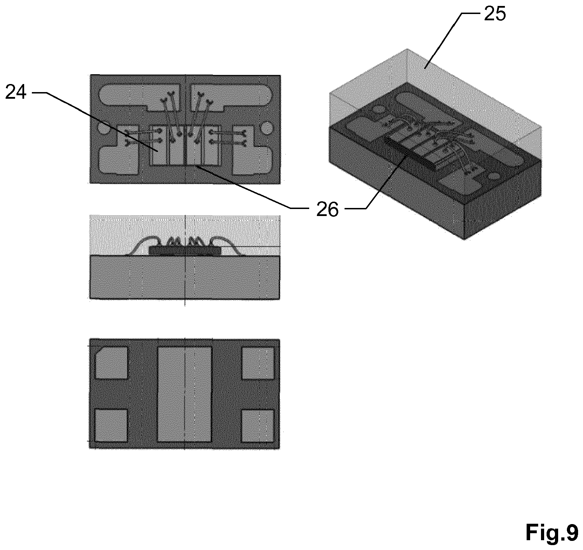

Zum Beispiel wird die Vielzahl von Sendekanälen mittels mehreren vertikal beabstandeten Laseremittern erzeugt, beispielsweise mittels eines Laserarrays wie in den Figuren 8 und 9 dargestellt, wobei beispielweise die Sender- und Empfängeraperturen 7,8, wie in Fig. 2a,2b dargestellt, horizontal beabstandet angeordnet sind.

Zurückkommende von der Empfängerapertur 8 erfasste Distanzmessstrahlen der unterschiedlichen Sendekanäle werden zum Beispiel über Linsensysteme und optische Umlenkmittel 10 auf eine für Distanzmessungen konfigurierte Sensoranordnung 11 von Semiconductor-Photomultiplier Sensoren (SPM-Sensoren) gelenkt, wobei mittels einer Empfangselektronik (nicht gezeigt) Distanzmessdaten bezüglich der Vielzahl von Sendekanälen erzeugt werden.

Ferner umfasst die Sender-Empfänger-Plattform 4 beispielsweise auch eine Recheneinheit 12 konfiguriert zum Ableiten einer dreidimensionalen Punktwolke basierend auf Winkeldaten bezüglich der Winkelausrichtung der Sender-Empfänger-Plattform 4 um die Rotationsachse 3, den Distanzmessdaten, und einer Anordnungs-Information indikativ für die Anordnung der Vielzahl von Sendekanälen. Alternativ kann die Recheneinheit auch statisch, beispielsweise in der Basis 2, angeordnet sein.

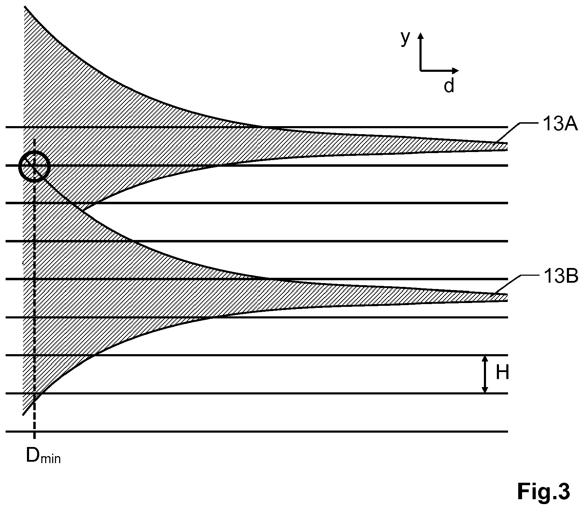

**Figur 3** zeigt exemplarisch das Problem von distanzabhängigen Crosstalks zwischen gleichzeitig aktivierten Sendekanälen, insbesondere für kurze Messdistanzen.

Die Figur bezieht sich wiederum auf die exemplarische in Fig 2a,2b dargestellte horizontale Aufstellung des Messgeräts 1, wobei die y-Richtung der (vertikalen) Richtung der Rotationsachse 3 entspricht. Dabei werden in y-Richtung jeweils als Funktion der Messdistanz d die vertikale Spot-Ausdehnung einer Abbildung von zwei zeitgleich mit einem vertikalen Versatz emittierten Distanzmessstrahlen 13A, 13B bzw. die vertikale Breite H (die "Höhe") von separaten Detektionsbereichen (Pixeln) der Sensorfläche dargestellt.

Einerseits sind die Distanzmessstrahlen von unterschiedlichen Sendekanälen durch einen schwer zu verhindernden vertikalen Versatz der Laseremitter in vertikaler Richtung biaxial zur Empfängerachse angeordnet, was insbesondere bei kurzen Distanzen zu einer verstärkten distanzabhängigen vertikalen Verschiebung der Laserspots auf der Sensorfläche führen kann, also in Richtung von den nächsten benachbarten Sendekanälen zugeordneten Detektionsbereichen. Ferner nimmt aufgrund von Defokussierung bei kürzer werdender Distanz typischerweise die Grösse des auf der Sensorfläche abgebildeten Laserspots zu.

Entsprechend übersteigt die (vertikale) Laserspot-Ausdehnung bei kürzeren Distanzen die vertikale Pixelgrösse H der Sensorfläche, wobei bei einer Distanz kleiner als eine Minimaldistanz Dₘᵢₙ ein Crosstalk zwischen den beiden simultan aktiven Kanälen auftritt, d.h. wobei die Distanzmessung des eigentlich dem Detektionsbereich zugeordneten Kanals Strahlung des anderen Kanals aufweist und deshalb gestört wird.

Gemäss der vorliegenden Erfindung werden deshalb unterschiedliche Elevationen abtastende Sendekanäle zeitlich aufeinanderfolgend aktiviert, so dass beispielsweise Winkelabstände zwischen einzelnen zeitgleich ausgesendeten Distanzmessstrahlen ausreichend gross gewählt werden können, um empfängerseitig Crosstalks zu vermeiden.

Ferner wird empfängerseitig eine Sensoranordnung 11 von Semiconductor-Photomultiplier Sensoren (SPM-Sensoren) verwendet, welche Distanzmessungen mit einer hohen Zeitauflösung ermöglichen. Ferner bieten SPM-Sensoren beispielsweise den Vorteil, dass damit grossflächige Sensoren mit einer grossen photoaktiven Fläche und hoher Frequenzbandbreite (bis mehrere GHz) realisiert werden können.

Bezugnehmend auf die in Fig. 2a dargestellte exemplarische horizontale Aufstellung des Messgeräts, weist die Sensoranordnung 11 beispielsweise mehrere vertikal übereinander angeordnete Semiconductor-Photomultiplier Sensoren auf, wobei die Ausgangswerte der Mikrozellen desselben Semiconductor-Photomultiplier Sensors jeweils ein gemeinsames Ausgangssignal erzeugen.

Dadurch kann beispielsweise eine weitgehende Unabhängigkeit zwischen Anzahl Sendekanäle und Anzahl Empfangskanäle (SPM-Sensoren) erreicht werden. Insbesondere erübrigt sich eine komplexe Ausrichtung einzelner Sendekanäle auf speziell zugeordnete Empfangsbereiche. Eine Ausrichtung muss lediglich derart erfolgen, dass zeitgleich ausgesendete Distanzmessstrahlen unterschiedlicher Sendekanäle jeweils auf unterschiedliche SPM-Sensoren der Sensoranordnung 11 abgebildet werden. In anderen Worten: dank der grossflächigen SPM-Sensoren mit hoher Zeitauflösung kann die Anzahl SPM-Sensoren kleiner sein als die Anzahl Sendekanäle, wobei dennoch eine hohe Abtastrate beibehalten werden kann und während einer Umdrehung der Sender-Empfänger-Plattform 4 ein wiederholtes Abtasten mittels der Vielzahl Sendekanäle möglich ist.

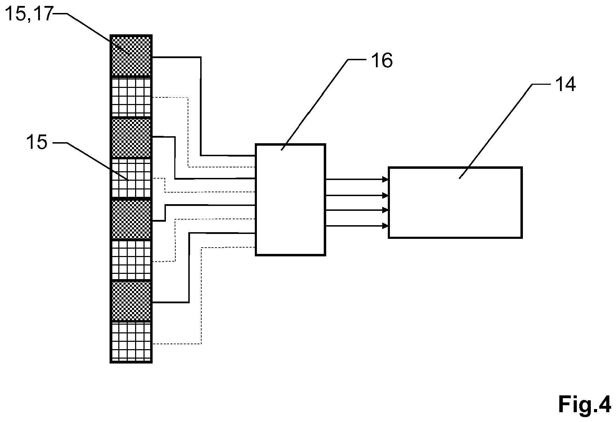

**Figur 4** zeigt schematisch eine Ausführungsform der Empfangseinheit des erfinderischen Messgeräts, wobei die Empfangseinheit eine mehrkanalfähige Distanzmesseinheit 14 zur simultanen Zeitmessung von mehreren Empfangssignalen von mehreren Distanzmessstrahlen aufweist.

Zum Beispiel weist die Sensoranordnung acht in einem 1D-Array angeordnete Semiconductor-Photomultiplier Sensoren (Pixel) 15 auf und die mehrkanalfähige Distanzmesseinheit 14 weist vier separierbare Distanzmesskanäle auf. Ferner weist die Empfangseinheit einen zwischen Sensoranordnung und Distanzmesseinheit angeordneten Kanalwähler 16 auf, z.B. einen Multiplexer.

Der Kanalwähler 16 kann jeden der acht SPM-Sensoren 15 jeweils einem der vier Distanzmesskanäle der mehrkanalfähigen Distanzmesseinheit 14 zuordnen, wobei der Kanalwähler 16 jeweils vier zu aktivierende SPM-Sensoren 17 selektiert und deren Analogsignale jeweils einem der vier separierbaren Empfangskanäle weiterleitet, welche beispielsweise über einen Signalumformer an einen FPGA ("Field Programmable Gate Array") angeschlossen sind. Als Zeitmessschaltung dient ein so genannter auf dem FPGA einprogrammierter "Time-to-Delay Converter" (TDC), welcher beispielsweise auf dem Prinzip von Verzögerungsleitungen (Tapped Delay Lines) mit einer Folge von Signalspeichern aufgebaut ist. Anstelle eines FPGA könnte beispielsweise auch ein 4-Kanal Analog-Digital-Wandler verwendet werden, der die Signale jeweils vier separierbaren Distanzmessschaltungen weiterleitet. Dabei kann die Wellenformdigitalisierungsmethode ("Waveform Digitizing", WFD) zum Einsatz kommen.

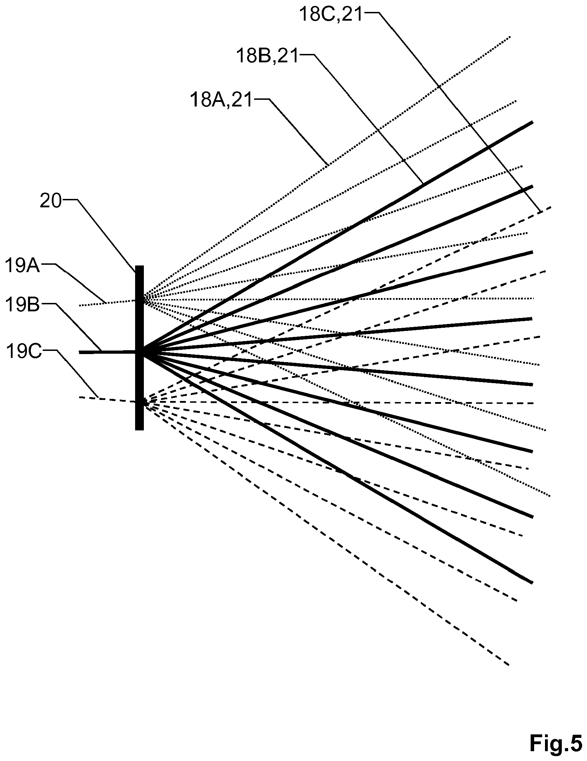

Insbesondere kann die mehrkanalfähige Distanzmesseinheit 14 zum gleichzeitigen Empfangen von simultan ausgesendeten Distanzmessstrahlen auf separierbaren Empfangskanälen mit zugeordneten Distanzmessschaltungen verwendet werden, d.h. in einer weiteren in den **Figuren 5 bis 7** dargestellten Ausführungsform des erfinderischen Messgeräts, wobei jeweils zeitlich aufeinanderfolgend unterschiedliche Sendekanalgruppen - aus jeweils gleichzeitig aktivierten Sendekanälen - aktiviert werden.

**Figur 5** zeigt schematisch drei zu unterschiedlichen Zeitpunkten aktivierte Sendekanalgruppen 18A,18B,18C, welche hier der Einfachheit halber in derselben Figur übereinandergelegt dargestellt werden.

Zum Beispiel werden die Sendekanalgruppen 18A,18B,18C jeweils mittels separater Laserstrahlquellen erzeugt. Die Laserstrahlquellen erzeugen dabei separate Laserstrahlen 19A,19B,19C, welche jeweils unter unterschiedlichen Winkeln (und je nach Ausführungsform unter unterschiedlichen Auftreffpunkten) auf ein Dammann-Gitter 20 treffen, so dass die einzelnen Laserstrahlen 19A,19B,19C jeweils in eine Vielzahl Distanzmessstrahlen 21 aufteilt werden. Die Distanzmessstrahlen einer Sendekanalgruppe 18A,18B,18C haben beispielsweise einen Zwischenwinkel von 1° und die Gruppe umfasst somit einen Winkelbereich von 7°, wobei die Sendekanalgruppen 18A,18B,18C jeweils zueinander um einen Winkel 0.33° beziehungsweise 0.66° verschwenkt sind. Das Scanfeld wird dadurch nur leicht grösser, nämlich 7.66° aber das zu scannende Objekt wird dreimal dichter abgetastet.

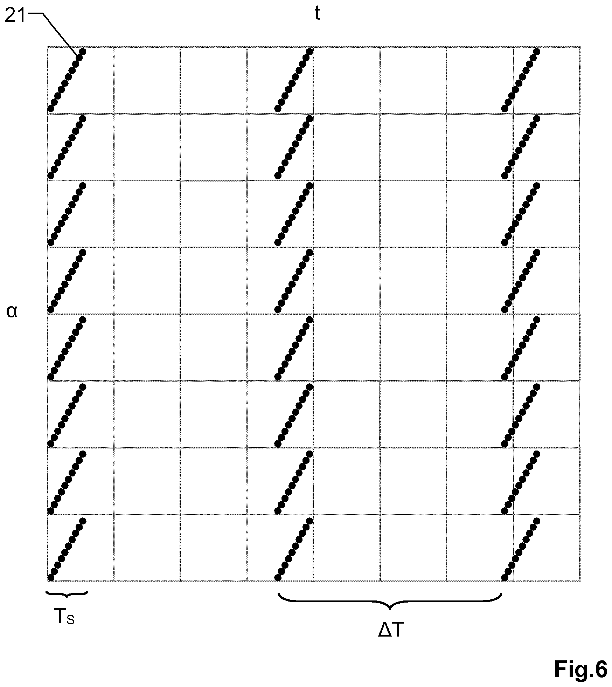

**Figur 6** zeigt schematisch eine Variante, wobei die zeitlich aufeinanderfolgend ausgesendeten Sendekanalgruppen konfiguriert sind, um jeweils Zwischen-Elevationen von mit einer vorhergehend aktivierten Sendekanalgruppe abgetasteten Elevationen abzutasten. So können beispielsweise mittels zehn Laserstrahlquellen und eines achtfach Dammann-Gitters 20 zehn separate Sendekanalgruppen mit jeweils unterschiedlich gerichteten Distanzmessstrahlen 21 erzeugt werden, so dass total achtzig unterschiedliche Elevationen abtastende Distanzmessstrahlen 21 ausgesendet werden.

Dabei werden die zehn Laserstrahlquellen jeweils kurz aufeinanderfolgend aktiviert, wodurch innerhalb eines Sendeintervalls T_{S} achtzig Distanzmessstrahlen 21 erzeugt werden, wobei die Sendekanäle mit einer derartigen Repetierrate aktiviert werden, dass pro Umlauf der Sender-Empfänger-Plattform 4 (Fig. 2a) um die Rotationsachse 3, eine Vielzahl von Sendeintervallen T_{S} generiert wird.

Zum Beispiel ist das Messgerät konfiguriert, dass die Sender-Empfänger-Plattform mit 25Hz dreht, d.h. eine volle Umdrehung (360°) um die Rotationsachse 3 dauert 40 msec. Angenommen bei dieser 360°-Umdrehung sind in einer Horizontalebene 2000 Punkte angeordnet, dann bleiben noch 40ms/2000=20usec für die Erzeugung einer vertikalen Punktreihe in einem Fächer. Falls dieser Fächer 80 Punkte umfasst, dann ist die mittlere Zeit pro Messpunkt = 250 nsec.

Die Figur zeigt schematisch die Distanzmessstrahlen 21 von drei aufeinanderfolgenden Sendeintervallen T_{S} als Funktion der Sendezeit t und des Elevationswinkels a.

Gemäss dieser Ausführungsform erzeugen die Sendekanalgruppen also jeweils ein identisches Abtastmuster, welches innerhalb eines jeweiligen Sendeintervalls fortlaufend in dieselbe Richtung verschoben wird (hier beispielsweise "nach oben").

Das Sendeintervall T_{S} ist hier zudem kürzer als die Zeitdifferenz ΔT zwischen einzelner Sendeintervalle T_{S}. Dadurch kann beispielsweise der Rechenaufwand für die Bestimmung der Punktwolke reduziert werden, indem Sendekanäle desselben Sendeintervalls T_{S} jeweils bezüglich eines mittleren Sendezeitpunkts des Sendeintervalls T_{S} ausgewertet werden.

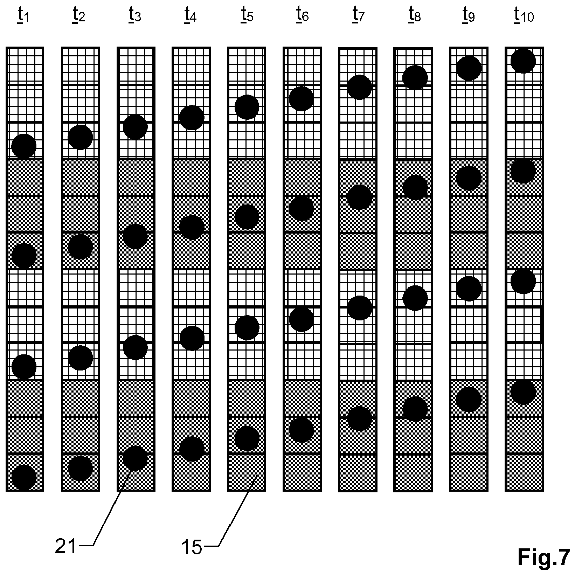

**Figur 7** zeigt schematisch zu Fig. 6 korrespondierende zeitliche Auftreffmuster der Distanzmessstrahlen 21 auf einer Sensorfläche aus einer Anordnung von mehreren Semiconductor-Photomultiplier Sensoren (SPM-Sensoren) 15. Gezeigt sind zehn unterschiedliche, jeweils mit den in einem Sendeintervall ausgesendeten zehn Sendekanalgruppen (jeweils aufweisend acht gleichzeitig aktive Sendekanäle) korrespondierende Empfangszeitpunkte t₁-t₁₀.

Zum Beispiel weist die Sensorfläche vierundzwanzig aneinander gereihte SPM-Sensoren 15 auf, wobei jeweils jeder SPM-Sensor 15 tausende, mit einem gemeinsamen Signalausgang verbundene Mikrozellen aufweist. Der Einfachheit halber sind in der Figur jedoch lediglich zwölf der vierundzwanzig SPM-Sensoren dargestellt, wobei die einzelnen mit den Sendekanalgruppen korrespondierenden Abtastmuster mit jedem Zeitschritt von unten nach oben wandern.

Die Distanzmessstrahlen 21 der verschiedenen Sendekanalgruppen werden also jeweils mittels unterschiedlichen SPM-Sensoren 15 erfasst, wobei durch die dreifache Anzahl SPM-Sensoren 15 im Vergleich zu den jeweils acht gleichzeitig aktiven Sendekanälen der Sendekanalgruppen eine grossflächige Sensorfläche bereitgestellt werden kann, ohne jedoch das Signal-RauschVerhältnis proportional zur Sensorfläche zu verschlechtern.

Um beispielsweise Speicherplatz zu sparen, z.B. bei kurzen Distanzen wie bei Innenaufnahmen, kann das Messgerät ferner konfiguriert sein, dass in einzelnen Sendeintervallen jeweils nicht alle Sendekanalgruppen aktiviert werden.

**Figur 8** zeigt schematisch drei unterschiedliche räumliche Ansichten A,B,C eines Laserarrays (Laserbarrens 27) aus neun Laserdioden mit entsprechenden Konnektoren 22 und einem Isolatorsubstrat 23. Beispielsweise hat dabei jede Laserdiode drei übereinander gestackte aktive Emissionszonen. Die Breite der Emissionszonen von Puls-Laserdioden liegt typischerweise zwischen 75 µm und 350 µm. Um die Strahldivergenz klein zu halten wird vorzugsweise eine möglichst schmale Emissionszone, beispielsweise 75 µm verwendet. Optional ist ferner beispielsweise eine zylindrische Stablinse nahe an den Emissionstreifen platziert, einerseits um den transversalen Emissionswinkel zu reduzieren, anderseits um das Strahlbündelprofil zu symmetrisieren.

**Figur 9** zeigt unterschiedliche Ansichten einer kommerziellen Lasereinheit bestehend aus einem Array von vier Laserdioden 24 mit micro-stacked Emissionszonen und Gehäuse 25, wobei in der Figur ferner die emittierende Seite 26 des Laserarrays angedeutet ist.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Messgerät (1) zur dreidimensionalen geometrischen Erfassung einer Umgebung, aufweisend
• eine Basis (2),
• eine gegenüber der Basis (2) um eine Rotationsachse (3) rotierbare Sender-Empfänger-Plattform (4), konfiguriert zur Rotation eines Strahlaustrittsbereichs (7) und eines Strahleintrittsbereichs (8) um die Rotationsachse (3),
• einen Winkelmesser zum Erfassen von Winkeldaten bezüglich der Winkelausrichtung der Sender-Empfänger-Plattform (4) um die Rotationsachse,
• eine Sendeeinheit mit einer Vielzahl von n Sendekanälen zum Aussenden von gepulsten Distanzmessstrahlen (21) über den Strahlaustrittsbereich (7), wobei die Sendekanäle bezüglich der Sender-Empfänger-Plattform (4) eine fixe Anordnung haben und mit jedem der Sendekanäle jeweils eine unterschiedliche Elevation bezüglich einer zur Rotationsachse (3) orthogonalen Bezugsebene abtastbar ist,
• eine Empfangseinheit konfiguriert zum Erfassen von über den Strahleintrittsbereich (8) zurückkommenden gepulsten Distanzmessstrahlen und zum Erzeugen von Distanzmessdaten bezüglich der Vielzahl von Sendekanälen, und
• eine Recheneinheit konfiguriert zum Ableiten einer dreidimensionalen Punktwolke basierend auf den Winkeldaten, den Distanzmessdaten, und einer Anordnungs-Information indikativ für die Anordnung der Vielzahl von Sendekanälen,
**dadurch gekennzeichnet, dass**
• die Empfangseinheit eine Sensoranordnung (11) von m Semiconductor-Photomultiplier Sensoren (15) aufweist, wobei jeder der Semiconductor-Photomultiplier Sensoren (15) jeweils eine Vielzahl von jeweils auf einem internen Verstärkungsmechanismus basierenden und im Geiger-Modus operierenden Mikrozellen aufweist und die Ausgangswerte der Mikrozellen eines jeweiligen Semiconductor-Photomultiplier Sensors (15) jeweils ein gemeinsames Ausgangssignal erzeugen,
• wobei m kleiner ist als n, und
• die Sende- und Empfangseinheit konfiguriert sind, dass mindestens zwei der Sendekanäle einem gemeinsamen Semiconductor-Photomultiplier Sensor (15) der Sensoranordnung (11) zugeordnet sind, welcher konfiguriert ist zum Erzeugen der Distanzmessdaten bezüglich der mindestens zwei Sendekanäle.

2. Messgerät (1) nach Anspruch 1,
**dadurch gekennzeichnet, dass**
• die Empfangseinheit k separierbare Distanzmesskanäle aufweist, wobei k kleiner oder gleich m ist,
• jeder der Semiconductor-Photomultiplier Sensoren (15) der Sensoranordnung (11) jeweils einem der k separierbaren Distanzmesskanälen zuordenbar ist, und
• jeder der k separierbaren Distanzmesskanäle konfiguriert ist zum Erzeugen von Distanzmessdaten bezüglich eines ihm zugeordneten Semiconductor-Photomultiplier Sensors (15) der Sensoranordnung (11).

3. Messgerät (1) nach Anspruch 2,
**dadurch gekennzeichnet, dass**
• die Sendeeinheit konfiguriert ist, eine Gruppe von k zeitgleich aktivierten Sendekanälen der Vielzahl von Sendekanälen als eine erste Sendekanalgruppe (18A,18B,18C) zu aktivieren, und
• die Sende- und die Empfangseinheit konfiguriert sind, dass die erste Sendekanalgruppe (18A,18B,18C), die Sensoranordnung (11), und die separierbaren Distanzmesskanäle aufeinander abgestimmt aktivierbar sind, so dass Ausgangssignale der Sensoranordnung (11) bezüglich der k Sendekanäle der ersten Sendekanalgruppe (18A,18B,18C) zeitgleich erfassbar sind.

4. Messgerät (1) nach einem der vorangehenden Ansprüche, **dadurch gekennzeichnet, dass**
die Empfangseinheit einen Kanalwähler (16), insbesondere einen Multiplexer, einen Datenspeicher, und eine Distanzmesseinheit aufweist, wobei
• der Kanalwähler konfiguriert ist zum Selektieren einer Gruppe von Semiconductor-Photomultiplier Sensoren (15) der Sensoranordnung (11) und zum Weiterleiten von Ausgangssignalen der Gruppe von Semiconductor-Photomultiplier Sensoren (15) an den Datenspeicher,
• der Datenspeicher konfiguriert ist zum Speichern von Daten bezüglich der Ausgangssignale der Gruppe von Semiconductor-Photomultiplier Sensoren (15), und
• die Distanzmesseinheit konfiguriert ist zum parallelen und/oder sequentiellen Erzeugen von Distanzmessdaten bezüglich zumindest eines Teils der Semiconductor-Photomultiplier Sensoren (15) der Gruppe von Semiconductor-Photomultiplier Sensoren (15).

5. Messgerät (1) nach einem der Ansprüche 3 oder 4,
**dadurch gekennzeichnet, dass**
die Sendeeinheit konfiguriert ist die Vielzahl von Sendekanälen derart zu aktivieren, dass eine Abfolge von, insbesondere jeweils gleich langen, Sendeintervallen erzeugt wird, wobei während eines jeweiligen Sendeintervalls
• die erste Sendekanalgruppe (18A,18B,18C) aktiviert wird,
• mindestens eine weitere Gruppe von zeitgleich aktivierten Sendekanälen der Vielzahl von Sendekanälen als zweite Sendekanalgruppe (18A,18B,18C) aktiviert wird, wobei
• die erste und die zweite Sendekanalgruppe im jeweiligen Sendeintervall zeitlich aufeinanderfolgend aktiviert werden,
• die zweite Sendekanalgruppe konfiguriert ist Zwischen-Elevationen von mit der ersten Sendekanalgruppe abgetasteten Elevationen abzutasten, und
• die Sende- und die Empfangseinheit konfiguriert sind, dass die zweite Sendekanalgruppe (18A,18B,18C), die Sensoranordnung (11), und die separierbaren Distanzmesskanäle aufeinander abgestimmt aktivierbar sind, so dass Ausgangssignale der Sensoranordnung (11) bezüglich der Sendekanäle der zweiten Sendekanalgruppe zeitgleich erfassbar sind.

6. Messgerät (1) nach Anspruch 5,
**dadurch gekennzeichnet, dass**
die Sendeeinheit konfiguriert ist die Abfolge von Sendeintervallen derart zu erzeugen, dass das Verhältnis von Sendeintervall zur Zeitdifferenz zwischen aufeinanderfolgenden Sendeintervallen der Abfolge von Sendeintervallen kleiner als 0.5 ist.

7. Messgerät (1) nach einem der Ansprüche 2 bis 6,
**dadurch gekennzeichnet, dass**
die Sensoranordnung (11) mindestens zwei mal k, insbesondere mindestens drei mal k, Semiconductor-Photomultiplier Sensoren (15) aufweist, wobei die Empfangseinheit konfiguriert ist, dass jeder der mindestens zwei mal k, bzw. drei mal k, Semiconductor-Photomultiplier Sensoren (15) jeweils einem der separierbaren Distanzmesskanäle zuordenbar ist.

8. Messgerät (1) nach einem der vorangehenden Ansprüche, **dadurch gekennzeichnet, dass**
die Sendeeinheit aufweist
• mindestens eine Laserstrahlquelle konfiguriert zum Erzeugen eines gepulsten Laserstrahls (19A,19B,19C), und
• einen optischen Strahlteiler (20) konfiguriert zur Aufteilung des gepulsten Laserstrahls (19A,19B,19C) in mehrere gepulste Teilstrahlen (21),
wobei die Sendeeinheit konfiguriert ist zum Erzeugen der Vielzahl von Sendekanälen basierend auf den mehreren gepulsten Teilstrahlen (21) des gepulsten Laserstrahls (19A,19B,19C).

9. Messgerät (1) nach Anspruch 8,
**dadurch gekennzeichnet, dass**
der optische Strahlteiler mindestens eines von folgendem aufweist
• ein Dammann-Gitter (20),
• ein faseroptischer Teiler,
• ein holografisches Element, und
• ein diffraktives optisches Element.

10. Messgerät (1) nach Anspruch 8 oder 9,
**dadurch gekennzeichnet, dass**
die Sendeeinheit konfiguriert ist, dass
• der Einfallswinkel und/oder der Auftreffpunkt des Laserstrahls (19A,19B,19C) auf den optischen Strahlteiler (20) einstellbar ist, und
• die Vielzahl von Sendekanälen basierend auf unterschiedlichen Einstellungen des Einfallswinkels und/oder Auftreffpunkts des
Laserstrahls (19A,19B,19C) erzeugt wird.

11. Messgerät (1) nach einem der vorangehenden Ansprüche, **dadurch gekennzeichnet, dass**
die Sendeeinheit zur Erzeugung der Vielzahl von Sendekanälen mindestens eine der folgenden Komponenten aufweist
• eine Laserdiode, insbesondere eine Puls-Laserdiode,
• ein Streifenlaser, und
• ein Laserbarren (27)
insbesondere wobei die Sendeeinheit ein Faserbündel aufweist und Laserstrahlung der Komponente auf ein Faserbündel eingekoppelt wird.

12. Messgerät (1) nach einem der vorangehenden Ansprüche, **dadurch gekennzeichnet, dass**
die Sendeeinheit konfiguriert ist zum Erzeugen einer ersten Laserstrahlanordnung zum Bereitstellen einer ersten Abtastdichte, wobei die Sendeeinheit eine Strahlteilereinheit (20) aufweist, konfiguriert zur Aufteilung der ersten Laserstrahlanordnung in eine zweite Laserstrahlanordnung, wobei die zweite Laserstrahlanordnung eine zur ersten Laserstrahlanordnung höhere Abtastdichte bereitstellt, wobei die Sendeeinheit konfiguriert ist
• zum Ein- und Auskoppeln der Strahlteilereinheit in einen Strahlengang der Sendeeinheit,
• zum Erzeugen der Vielzahl von Sendekanälen als Grob-Abtastmuster basierend auf der ersten Laserstrahlanordnung, und
• zum Erzeugen der Vielzahl von Sendekanälen als Fein-Abtastmuster basierend auf der zweiten Laserstrahlanordnung.

13. Messgerät (1) nach einem der vorangehenden Ansprüche, **dadurch gekennzeichnet, dass**
das Messgerät konfiguriert ist, dass
• zumindest ein Teil der Sender-Empfänger-Plattform (4) bezüglich der Rotationsachse (3) um einen Kippwinkel verkippbar ist, und
• die Vielzahl von Sendekanälen basierend auf unterschiedlich eingestellten Kippwinkeln erzeugt wird, insbesondere wobei durch die unterschiedlich eingestellten Kippwinkel eine Erweiterung des Elevations-Gesichtsfelds des Messgeräts erzeugt wird.

14. Messgerät (1) nach einem der vorangehenden Ansprüche, **dadurch gekennzeichnet, dass**
die Empfangseinheit eine Zeiterfassungseinheit mit mindestens einer von folgenden Anordnungen aufweist
• ein mehrkanaliger Wellenfront-Digitalisierer,
• eine mehrkanalige Schwellwertdiskriminatoreinheit mit nachgeschalteten Time-to-Delay Konvertern, und
• ein Field Programmable Gate Array mit einprogrammierter mehrkanaliger Zeiterfassungslogik.

## Claims

1. Measuring apparatus (1) for the three-dimensional geometric acquisition of surroundings, comprising
• a base (2),
• a transceiver platform (4) rotatable about a rotation axis (3) relative to the base (2), configured for rotating a beam exit region (7) and a beam entrance region (8) about the rotation axis (3),
• a goniometer for acquiring angle data with respect to the angular orientation of the transceiver platform (4) about the rotation axis,
• a transmitting unit having a multiplicity of n transmission channels for emitting pulsed distance measurement beams (21) via the beam exit region (7), wherein the transmission channels have a fixed arrangement with respect to the transceiver platform (4) and in each case a different elevation with respect to a reference plane orthogonal to the rotation axis (3) is scannable with each of the transmission channels,
• a receiving unit configured for acquiring pulsed distance measurement beams returning via the beam entrance region (8) and for generating distance measurement data with respect to the multiplicity of transmission channels, and
• a computing unit configured for deriving a three-dimensional point cloud on the basis of the angle data, the distance measurement data, and arrangement information indicative of the arrangement of the multiplicity of transmission channels,
**characterized in that**
• the receiving unit comprises a sensor arrangement (11) of m semiconductor photomultiplier sensors (15), wherein each of the semiconductor photomultiplier sensors (15) comprises in each case a multiplicity of microcells which in each case are based on an internal gain mechanism and operate in the Geiger mode, and the output values of the microcells of a respective semiconductor photomultiplier sensor (15) in each case generate a common output signal,
• wherein m is less than n, and
• the transmitting unit and the receiving unit are configured such that at least two of the transmission channels are assigned to a common semiconductor photomultiplier sensor (15) of the sensor arrangement (11), which sensor is configured for generating the distance measurement data with respect to the at least two transmission channels.

2. Measuring apparatus (1) according to claim 1, **characterized in that**
• the receiving unit comprises k separable distance measurement channels, wherein k is less than or equal to m,
• each of the semiconductor photomultiplier sensors (15) of the sensor arrangement (11) is assignable in each case to one of the k separable distance measurement channels, and
• each of the k separable distance measurement channels is configured for generating distance measurement data with respect to a semiconductor photomultiplier sensor (15) of the sensor arrangement (11) that is assigned to it.

3. Measuring apparatus (1) according to claim 2, **characterized in that**
• the transmitting unit is configured to activate a group of k simultaneously activated transmission channels of the multiplicity of transmission channels as a first transmission channel group (18A, 18B, 18C), and
• the transmitting unit and the receiving unit are configured such that the first transmission channel group (18A, 18B, 18C), the sensor arrangement (11), and the separable distance measurement channels are activatable in a manner coordinated with one another, such that output signals of the sensor arrangement (11) with respect to the k transmission channels of the first transmission channel group (18A, 18B, 18C) are acquirable simultaneously.

4. Measuring apparatus (1) according to any one of the preceding claims,
**characterized in that**
the receiving unit comprises a channel selector (16), in particular a multiplexer, a data memory, and a distance measuring unit, wherein
• the channel selector is configured for selecting a group of semiconductor photomultiplier sensors (15) of the sensor arrangement (11) and for forwarding output signals of the group of semiconductor photomultiplier sensors (15) to the data memory,
• the data memory is configured for storing data with respect to the output signals of the group of semiconductor photomultiplier sensors (15), and
• the distance measuring unit is configured for parallel and/or sequential generation of distance measurement data with respect to at least one portion of the semiconductor photomultiplier sensors (15) of the group of semiconductor photomultiplier sensors (15).

5. Measuring apparatus (1) according to either of claims 3 and 4,
**characterized in that**
the transmitting unit is configured to activate the multiplicity of transmission channels in such a way that a sequence of transmission intervals, in particular each of identical length, is generated, wherein during a respective transmission interval
• the first transmission channel group (18A, 18B, 18C) is activated,
• at least one further group of simultaneously activated transmission channels of the multiplicity of transmission channels is activated as second transmission channel group (18A, 18B, 18C),
wherein
• the first and second transmission channel groups are activated temporally successively in the respective transmission interval,
• the second transmission channel group is configured to scan intermediate elevations of elevations scanned by the first transmission channel group, and
• the transmitting unit and the receiving unit are configured such that the second transmission channel group (18A, 18B, 18C), the sensor arrangement (11), and the separable distance measurement channels are activatable in a manner coordinated with one another, such that output signals of the sensor arrangement (11) with respect to the transmission channels of the second transmission channel group are acquirable simultaneously.

6. Measuring apparatus (1) according to claim 5, **characterized in that**
the transmitting unit is configured to generate the sequence of transmission intervals in such a way that the ratio of the transmission interval to the time difference between successive transmission intervals of the sequence of transmission intervals is less than 0.5.

7. Measuring apparatus (1) according to any one of claims 2 to 6,
**characterized in that**
the sensor arrangement (11) comprises at least two times k, in particular at least three times k, semiconductor photomultiplier sensors (15), wherein the receiving unit is configured such that each of the at least two times k, or three times k, semiconductor photomultiplier sensors (15) is assignable in each case to one of the separable distance measurement channels.

8. Measuring apparatus (1) according to any one of the preceding claims,
**characterized in that**
the transmitting unit comprises
• at least one laser beam source configured for generating a pulsed laser beam (19A, 19B, 19C), and
• an optical beam splitter (20) configured for splitting the pulsed laser beam (19A, 19B, 19C) into a plurality of pulsed partial beams (21),
wherein the transmitting unit is configured for generating the multiplicity of transmission channels on the basis of the plurality of pulsed partial beams (21) of the pulsed laser beam (19A, 19B, 19C).

9. Measuring apparatus (1) according to claim 8, **characterized in that**
the optical beam splitter comprises at least one of the following:
• a Dammann grating (20),
• a fiber-optic splitter,
• a holographic element, and
• a diffractive optical element.

10. Measuring apparatus (1) according to claim 8 or 9, **characterized in that**
the transmitting unit is configured such that
• the angle of incidence and/or the impingement point of the laser beam (19A, 19B, 19C) on the optical beam splitter (20) is settable, and
• the multiplicity of transmission channels is generated on the basis of different settings of the angle of incidence and/or impingement point of the laser beam (19A, 19B, 19C).

11. Measuring apparatus (1) according to any one of the preceding claims,
**characterized in that**
the transmitting unit for generating the multiplicity of transmission channels comprises at least one of the following components:
• a laser diode, in particular a pulsed laser diode,
• a stripe laser, and
• a laser bar (27),
in particular wherein the transmitting unit comprises a fiber bundle and laser radiation of the component is coupled into a fiber bundle.

12. Measuring apparatus (1) according to any one of the preceding claims,
**characterized in that**
the transmitting unit is configured for generating a first laser beam arrangement for providing a first scanning density, wherein the transmitting unit comprises a beam splitter unit (20) configured for splitting the first laser beam arrangement into a second laser beam arrangement, wherein the second laser beam arrangement provides a higher scanning density than the first laser beam arrangement, wherein the transmitting unit is configured
• for coupling the beam splitter unit into and out of a beam path of the transmitting unit,
• for generating the multiplicity of transmission channels as a coarse scanning pattern on the basis of the first laser beam arrangement, and
• for generating the multiplicity of transmission channels as a fine scanning pattern on the basis of the second laser beam arrangement.

13. Measuring apparatus (1) according to any one of the preceding claims,
**characterized in that**
the measuring apparatus is configured such that
• at least one part of the transceiver platform (4) is tiltable by a tilt angle with respect to the rotation axis (3), and
• the multiplicity of transmission channels is generated on the basis of differently set tilt angles, in particular wherein an extension of the elevation field of view of the measuring apparatus is generated by the differently set tilt angles.

14. Measuring apparatus (1) according to any one of the preceding claims,
**characterized in that**
the receiving unit comprises a time acquisition unit having at least one of the following arrangements:
• a multichannel wavefront digitizer,
• a multichannel threshold value discriminator unit with time-to-delay convertors connected downstream, and
• a field programmable gate array with multichannel time acquisition logic programmed in.

## Revendications

1. Appareil de mesure (1) pour capture tridimensionnelle géométrique d'un environnement, comportant
• une base (2),
• une plateforme d'émission-réception (4) pouvant tourner autour d'un axe de rotation (3) par rapport à la base (2), configurée pour la rotation d'un domaine de sortie de faisceau (7) et d'un domaine d'entrée de faisceau (8) autour de l'axe de rotation (3),
• un goniomètre pour la capture de données angulaires se rapportant à l'orientation angulaire de la plateforme d'émission-réception (4) autour de l'axe de rotation,
• une unité émettrice dotée d'une pluralité de n canaux d'émission pour l'émission de faisceaux télémétriques pulsés (21) par le biais du domaine de sortie de faisceau (7), dans lequel les canaux d'émission ont une disposition fixe par rapport à la plateforme d'émission-réception (4) et une élévation différente par rapport à un plan de référence orthogonal à l'axe de rotation (3) respective peut être balayée par chacun des canaux d'émission,
• une unité réceptrice configurée pour la capture de faisceaux télémétriques pulsés revenant par le biais du domaine d'entrée de faisceau (8) et pour l'obtention de données télémétriques se rapportant à la pluralité de canaux d'émission, et
• une unité de calcul configurée pour dériver un nuage de points tridimensionnel sur la base des données angulaires, des données télémétriques et d'une information de disposition indiquant la disposition de la pluralité de canaux d'émission, **caractérisé en ce que**
• l'unité réceptrice comporte un arrangement de capteurs (11) de m capteurs photomultiplicateurs à semiconducteurs (15), dans lequel chacun des capteurs photomultiplicateurs à semiconducteurs (15) comporte respectivement une pluralité de microcellules respectivement basées sur un mécanisme d'amplification interne et fonctionnant en mode Geiger et les valeurs de sortie des microcellules d'un capteur photomultiplicateur à semiconducteurs (15) respectif génèrent respectivement un signal de sortie commun,
• dans lequel m est inférieur à n, et
• l'unité émettrice et l'unité réceptrice sont configurées de sorte qu'au moins deux des canaux d'émission sont associés à un même capteur photomultiplicateur à semiconducteurs (15) de l'arrangement de capteurs (11), lequel est configuré pour l'obtention des données télémétriques se rapportant aux au moins deux canaux d'émission.

2. Appareil de mesure (1) selon la revendication 1, **caractérisé en ce que**
• l'unité réceptrice comporte k canaux de télémétrie séparables, dans lequel k est inférieur ou égal à m,
• chacun des capteurs photomultiplicateurs à semiconducteurs (15) de l'arrangement de capteurs (11) peut être associé respectivement à un des k canaux de télémétrie séparables, et
• chacun des k canaux de télémétrie séparables est configuré pour l'obtention de données télémétriques par rapport à un capteur photomultiplicateur à semiconducteurs (15) de l'arrangement de capteurs (11) qui lui est associé.

3. Appareil de mesure (1) selon la revendication 2, **caractérisé en ce que**
• l'unité émettrice est configurée pour activer un groupe de k canaux d'émission activés simultanément de la pluralité de canaux d'émission en tant que premier groupe de canaux d'émission (18A, 18B, 18C), et
• l'unité émettrice et l'unité réceptrice sont configurées de sorte que le premier groupe de canaux d'émission (18A, 18B, 18C), l'arrangement de capteurs (11), et les canaux de télémétrie séparables sont activables de manière coordonnée de sorte que les signaux de sortie de l'arrangement de capteurs (11) par rapport aux k canaux d'émission du premier groupe de canaux d'émission (18A, 18B, 18C) peuvent être capturés simultanément.

4. Appareil de mesure (1) selon l'une des revendications précédentes,
**caractérisé en ce que**
l'unité réceptrice comporte un sélecteur de canal (16), en particulier un multiplexeur, une mémoire de données et une unité de télémétrie, dans lequel
• le sélecteur de canal est configuré pour sélectionner un groupe de capteurs photomultiplicateurs à semiconducteurs (15) de l'arrangement de capteurs (11) et pour transmettre des signaux de sortie du groupe de capteurs photomultiplicateurs à semiconducteurs (15) à la mémoire de données,
• la mémoire de données est configurée pour enregistrer des données se rapportant aux signaux de sortie du groupe de capteurs photomultiplicateurs à semiconducteurs (15), et
• l'unité de télémétrie est configurée pour obtenir de façon parallèle et/ou séquentielle des données de télémétrie se rapportant à au moins une partie des capteurs photomultiplicateurs à semiconducteurs (15) du groupe de capteurs photomultiplicateurs à semiconducteurs (15).

5. Appareil de mesure (1) selon l'une des revendications 3 ou 4,
**caractérisé en ce que**
l'unité émettrice est configurée pour activer la pluralité de canaux d'émission de telle sorte qu'une succession d'intervalles d'émission, en particulier de même durée respective, est obtenue, dans lequel pendant un intervalle d'émission respectif
• le premier groupe de canaux d'émission (18A, 18B, 18C) est activé,
• au moins un autre groupe de canaux d'émission activés simultanément de la pluralité de canaux d'émission est activé en tant que deuxième groupe de canaux d'émission (18A, 18B, 18C),
dans lequel
• le premier et le deuxième groupe de canaux d'émission sont activés chronologiquement l'un après l'autre dans l'intervalle d'émission respectif,
• le deuxième groupe de canaux d'émission est configuré pour balayer des élévations intermédiaires des élévations balayées avec le premier groupe de canaux d'émission, et
• l'unité émettrice et l'unité réceptrice sont configurées de sorte que le deuxième groupe de canaux d'émission (18A, 18B, 18C), l'arrangement de capteurs (11), et les canaux de télémétrie séparables sont activables de manière coordonnée de sorte que les signaux de sortie de l'arrangement de capteurs (11) par rapport aux canaux d'émission du deuxième groupe de canaux d'émission peuvent être capturés simultanément.

6. Appareil de mesure (1) selon la revendication 5, **caractérisé en ce que**
l'unité émettrice est configurée pour obtenir la succession d'intervalles d'émission de telle sorte que le rapport intervalle d'émission sur différence de temps entre des intervalles d'émission chronologiquement successifs de la succession d'intervalles d'émission est inférieure à 0,5.

7. Appareil de mesure (1) selon l'une des revendications 2 à 6,
**caractérisé en ce que**
l'arrangement de capteurs (11) comporte au moins deux fois k, en particulier au moins trois fois k, capteurs photomultiplicateurs à semiconducteurs (15), dans lequel l'unité réceptrice est configurée de sorte que chacun des au moins deux fois k ou trois fois k capteurs photomultiplicateurs à semiconducteurs (15) peut respectivement être associé à un des canaux de télémétrie séparables.

8. Appareil de mesure (1) selon l'une des revendications précédentes,
**caractérisé en ce que**
l'unité émettrice comporte
• au moins une source de rayonnement laser configurée pour l'obtention d'un faisceau laser pulsé (19A, 19B, 19C), et
• un séparateur de faisceau optique (20) configuré pour diviser le faisceau laser pulsé (19A, 19B, 19C) en plusieurs faisceaux partiels pulsés (21),
dans lequel l'unité émettrice est configurée pour obtenir la pluralité de canaux d'émission sur la base des plusieurs faisceaux partiels pulsés (21) du faisceau laser pulsé (19A, 19B, 19C).

9. Appareil de mesure (1) selon la revendication 8, **caractérisé en ce que**
le séparateur de faisceau optique comporte au moins un des éléments suivants
• un réseau de Dammann (20),
• un séparateur à fibre optique,
• un élément holographique, et
• un élément optique de diffraction.

10. Appareil de mesure (1) selon la revendication 8 ou 9,
**caractérisé en ce que**
l'unité émettrice est configurée de sorte que
• l'angle d'incidence et/ou le point d'impact du faisceau laser (19A, 19B, 19C) est réglable sur le séparateur de faisceau optique (20), et
• la pluralité de canaux d'émission est obtenue sur la base de différents réglages de l'angle d'incidence et/ou du point d'impact du faisceau laser (19A, 19B, 19C).

11. Appareil de mesure (1) selon l'une des revendications précédentes,
**caractérisé en ce que**
l'unité émettrice comporte au moins un des composants suivants pour l'obtention de la pluralité de canaux d'émission
• une diode laser, en particulier une diode laser impulsionnelle,
• un laser à bande, et
• une barre laser (27)
en particulier dans lequel l'unité émettrice comporte un faisceau de fibres et le rayonnement laser des composants est couplé sur un faisceau de fibres.

12. Appareil de mesure (1) selon l'une des revendications précédentes,
**caractérisé en ce que**
l'unité émettrice est configurée pour l'obtention d'un premier dispositif de rayonnement laser afin de fournir une première densité d'échantillonnage, dans lequel l'unité émettrice comporte une unité séparatrice de faisceau (20), configurée pour la division du premier dispositif de rayonnement laser en un deuxième dispositif de rayonnement laser, dans lequel le deuxième dispositif de rayonnement laser fournit une densité d'échantillonnage supérieure à celle du premier dispositif de rayonnement laser, dans lequel l'unité émettrice est configurée
• pour le couplage et le découplage de l'unité séparatrice de faisceau dans un chemin optique de l'unité émettrice,
• pour l'obtention de la pluralité de canaux d'émission comme motif de balayage grossier sur la base du premier dispositif de rayonnement laser, et
• pour l'obtention de la pluralité de canaux d'émission comme motif de balayage fin sur la base du deuxième dispositif de rayonnement laser.

13. Appareil de mesure (1) selon l'une des revendications précédentes,
**caractérisé en ce que**
l'appareil de mesure est configuré de sorte
• qu'au moins une partie de la plateforme d'émission-réception (4) peut basculer d'un angle de bascule par rapport à l'axe de rotation (3), et
• la pluralité de canaux d'émission est obtenue sur la base de différents angles de bascule réglés, en particulier dans lequel un élargissement du champ de vision d'élévation de l'appareil de mesure est obtenu par les différents réglages d'angle de bascule.

14. Appareil de mesure (1) selon l'une des revendications précédentes,
**caractérisé en ce que**
l'unité réceptrice comporte une unité de mesure de temps dotée d'au moins un des dispositifs suivants
• un numériseur de front d'onde multicanaux,
• une unité comparatrice de valeur seuil multicanaux dotée de convertisseurs time-to-delay, et
• un réseau de portes programmables (Field Programmable Gate Array) doté d'une logique programmée multicanaux de mesure de temps.
